# EUROPEAN PATENT APPLICATION

(11) **EP 4 837 933 A1**
(43) Date of publication of application: **11.11.2026**
(21) Application number: 25174709.3
(22) Date of filing: 07.05.2025
(51) Int. Cl.: C08L 67/02

(54) **IONOMER-CONTAINING FLAME RETARDANT POLYESTER COMPOSITIONS**

(71) Applicant: SHPP Global Technologies B.V., 4612 PX Bergen op Zoom (NL)
(72) Inventor: Mercx, Franciscus Petrus Maria, 4612 PX Bergen op Zoom (NL)
(74) Representative: Modiano, Gabriella Diana

(57) **Abstract**

Thermoplastic compositions include: (a) from about 40 wt% to about 85 wt% of a polyester resin; (b) from about 10 wt% to about 25 wt% of a phosphorous-based flame retardant; and (c) from about 0.1 wt% to about 10 wt% of a thermoplastic polymeric ionomer. The combined weight percent value of all components does not exceed 100 wt%, and all weight percent values are based on the total weight of the composition. The composition has good flame retardant properties.

## Description

### FIELD OF THE DISCLOSURE

The present disclosure relates to thermoplastic compositions including a polyester resin, and in particular to thermoplastic compositions including a polyester, a phosphorous flame retardant, and thermoplastic polymeric ionomer that have good flame retardant properties.

### BACKGROUND OF THE DISCLOSURE

Polybutylene terephthalate (PBT) is a thermoplastic resin that has many desirable properties, but it is inherently flammable. The UL94 flammability test requires short flame out times and no flaming drips to achieve a V0 rating. PBT tends to drip when exposed to a flame; this behavior worsens as the wall thickness decreases. A fluorine-based anti-drip additive, such as polytetrafluoroethylene (PTFE), and particularly styrene-acrylonitrile encapsulated PTFE (TSAN), is typically added to PBT compositions to allow them to achieve a V0 UL94 rating.

PTFE is classified as a Per- and Polyfluoroalkyl Substance, abbreviated as PFAS. The use of PFAS is presently being restricted by regulatory or environmental health and safety (EHS) considerations. Accordingly, efforts to develop robust flame-retardant PBT compositions that achieve UL94 V0 performance without the use of PFAS are ongoing. In particular, it is desirable to develop PBT-based compositions that will not produce burning drips, which has conventionally been the function of PTFE in such compositions. It is particularly difficult to develop PBT-based articles with low wall thicknesses (e.g., 1.0 mm or lower) that do not produce flaming drips without the use of PTFE.

These and other shortcomings are addressed by aspects of the present disclosure.

### SUMMARY

Aspects of the disclosure relate to thermoplastic compositions including: (a) from about 40 wt% to about 85 wt% of a polyester resin; (b) from about 10 wt% to about 25 wt% of a phosphorous-based flame retardant; and (c) from about 0.1 wt% to about 10 wt% of a thermoplastic polymeric ionomer. The combined weight percent value of all components does not exceed 100 wt%, and all weight percent values are based on the total weight of the composition. The composition has good flame retardant properties.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyester resin" includes mixtures of two or more polyester resins.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mₙ" can be used interchangeably, and refer to the statistical average molecular weight of all the polymer chains in the sample and is defined by the formula: ${M}_{n} = \frac{\sum {N}_{i} {M}_{i}}{\sum {N}_{i}} ,$ where Mᵢ is the molecular weight of a chain and Nᵢ is the number of chains of that molecular weight. Mₙ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "M_{w}" can be used interchangeably, and are defined by the formula: ${M}_{w} = \frac{\sum {N}_{i} {{M}_{i}}^{2}}{\sum {N}_{i} {M}_{i}} ,$ where Mᵢ is the molecular weight of a chain and Nᵢ is the number of chains of that molecular weight. Compared to Mₙ, M_{w} takes into account the molecular weight of a given chain in determining contributions to the molecular weight average. Thus, the greater the molecular weight of a given chain, the more the chain contributes to the M_{w}. M_{w} can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula: $PDI = \frac{{M}_{w}}{{M}_{n}} .$ The PDI has a value equal to or greater than 1, but as the polymer chains approach uniform chain length, the PDI approaches unity.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure include thermoplastic compositions including: (a) from about 40 wt% to about 85 wt% of a polyester resin; (b) from about 10 wt% to about 25 wt% of a phosphorous-based flame retardant; and (c) from about 0.1 wt% to about 10 wt% of a thermoplastic polymeric ionomer. The combined weight percent value of all components does not exceed 100 wt%, and all weight percent values are based on the total weight of the composition.

The polyester resin may include in some aspects polybutylene terephthalate (PBT), polyethylene terephthalate (PET), polytrimethylene terephthalate (PTT), copolymers thereof, or combinations thereof. In specific aspects the polyester resin includes PBT.

As used herein, "polyester" refers to a polymer containing an ester functional group in the backbone of the polymer.

As used herein, "polyethylene terephthalate" can be used interchangeably with poly(ethyl benzene-1,4-dicarboxylate).

As used herein, "polybutylene terephthalate" is a polyester that can be used interchangeably with poly(1,4-butylene terephthalate). Polybutylene terephthalate is one type of polyester. The PBT component may include PBT homopolymers, PBT copolymers, or a combination thereof.

The PBT resin may include virgin PBT, chemically upcycled PBT, mechanically recycled PBT, or a combination thereof.

An example of a chemical recycled polybutylene terephthalate is iQ PBT, derived from a chemical upcycled (or post-consumer recycled) polyethylene terephthalate (PET). Commercial examples of an upcycled PBT include those available under the trade name ELCRIN^{™} iQ Resin, manufactured by SABIC^{™}. The PBT may be derived from the PET by any method that involves depolymerization of the PET and polymerization of the depolymerized PET with 1,4 butanediol to provide the PET-derived PBT.

In certain aspects the PBT resin includes a high flow PBT having an intrinsic viscosity of less than 1.0 deciliters per gram (dl/g) and a low flow PBT having an intrinsic viscosity of at least 1.0 dl/g. Intrinsic viscosity may be measured in a 60:40 phenol/tetrachloroethane mixture in accordance with ASTM D2857. In some aspects the high flow PBT has an intrinsic viscosity of less than 0.95 dl/g, or less than 0.9 dl/g, or less than 0.85 dl/g, or less than 0.8 dl/g, or less than 0.75 dl/g, or less than 0.7 dl/g, or from about 0.6 dl/g to about 0.7 dl/g. In further aspects the low flow PBT has an intrinsic viscosity of at least 1.05 dl/g, or at least 1.10 dl/g, or at least 1.15 dl/g, or from about 1.10 dl/g to about 1.2 dl/g, or from about 1.15 dl/g to about 1.20 dl/g.

In specific aspects the PBT resin includes a high flow PBT and a low flow PBT (e.g., PBT315) in a ratio of from 100 to 1 (100:1) to 1 to 2 (1:2), such as but not limited to, 100:1 (high flow PBT to low flow PBT), 95:1, 90:1, 85:1, 80:1, 75:1, 70:1, 65:1, 60:1, 55:1, 50:1, 45:1, 40:1, 35:1, 30:1, 25:1, 20:1, 15:1, 10:1, 5:1, 4.5:1, 4:1, 3.5:1, 3:1, 2.5:1, 2:1, 1.5:1, 1:1, 0.9:1, 0.8:1, 0.7:1, 0.6:1, 0.5:1, 0.4:1, 0.3:1, 0.2:1, 0.1:1, 0.05:1, or 0.01:1. Ranges selected from these ratios are also possible.

Compositions according to aspects of the disclosure include from about 40 wt% to about 85 wt% of the polyester resin. In some aspects the compositions include at least 40 w%, or at least 45 wt%, or at least 50 wt%, or at least 55 wt%, or at least 60 wt%, or at least 65 wt%, or at least 70 wt%, or at most 85 wt%, or at most 80 wt%, or at most 75 wt%, or at most 70 wt%, or at most 65 wt%, or at most 60 wt%, or at most 55 wt%, of the polyester resin.

Compositions according to aspects of the disclosure include from about 10 wt% to about 25 wt% of a phosphorous-based flame retardant. An example of a phosphorous-based flame retardant is a dialkyl phosphinic acid salt. An example of a dialkyl phosphinic acid salt is aluminum tris(diethyl phosphinate). One such aluminum tris(diethyl phosphinate) is Exolit^{®} OP1240, available from Clariant, which has a phosphorous content of about 24 wt%.

In further aspects the composition includes at least 10 wt%, or at least 11 wt%, or at least 12 wt%, or at least 13 wt%, or at least 14 wt%, or at least 15 wt%, or at least 16 wt%, or at least 17 wt%, or at most 25 wt%, or at most 24 wt%, or at most 23 wt%, or at most 22 wt%, or at most 21 wt%, or at most 20 wt%, or at most 19 wt%, or at most 18 wt%, or at most 17 wt%, or at most 16 wt%, or at most 15 wt%, or at most 14 wt%, or at most 13 wt%, of the phosphorous-based flame retardant.

The composition includes from about 0.1 wt% to about 10 wt% of a thermoplastic polymeric ionomer. Examples of thermoplastic polymeric ionomers include, but are not limited to, a sulphonated polyethylene terephthalate ionomer, an ethylene/methacrylic acid copolymer, or a combination thereof. In a specific aspect the thermoplastic polymeric ionomer includes a sulphonated polyethylene terephthalate ionomer.

In certain aspects the composition includes at least 0.1 wt%, or at least 0.15 wt%, or at least 0.2 wt%, or at least 0.25 wt%, or at least 0.3 wt%, or at least 0.35 wt%, or at least 0.4 wt%, or at least 0.45 wt%, or at least 0.5 wt%, or at least 0.75 wt%, or at least 1 wt%, or at least 1.25 wt%, or at least 1.5 wt%, or at least 1.75 wt%, or at least 2 wt%, or at least 2.25 wt%, or at least 2.5 wt%, or at least 2.75 wt%, or at least 3 wt%, or at most 10 wt%, or at most 9 wt%, or at most 8 wt%, or at most 7 wt%, or at most 6 wt%, or at most 5 wt%, or at most 4.5 wt%, or at most 4 wt%, or at most 3.5 wt%, or at most 3 wt%, or at most 2.5 wt%, or at most 2 wt%, or at most 1.5 wt%, or at most 1 wt%, or at most 0.75 wt%, or at most 0.5 wt%, of the thermoplastic polymeric ionomer.

In some aspects the composition further includes from about 0.1 wt% to about 10 wt% of a polyetherimide (PEI) polymer. As used herein, "polyetherimide" refers to polymers containing ether and optionally substituted imide functional groups in the backbone of the polymer.

In further aspect the composition includes at least 0.1 wt%, or at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, of the PEI polymer.

Compositions according to aspects of the disclosure may further include from about 0.1 wt% to about 10 wt% of an additional flame retardant including, but not limited to, melamine polyphosphate, melamine cyanurate, melamine pyrophosphate, melamine phosphate, or the combination thereof.

In specific aspects the composition includes at least 0.1 wt%, or at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, of the additional flame retardant.

The composition may further include a filler such as glass fibers. In particular aspects the composition includes from about 0.1 wt% to about 40 wt% glass fibers. The glass fibers are chopped round glass fibers in some aspects. One suitable glass fiber is EC S03T-120H, available from NEG Industries; these glass fibers have a diameter of about 10 micrometers and a pre-compounded length of about 3.0 millimeters.

In some aspects the composition includes at least 0.1 wt%, or at least 1 wt%, or at least 5 wt%, or at least 10 wt%, or at least 15 wt%, or at least 20 wt%, or at least 25 wt%, or at most 40 wt%, or at most 35 wt%, or at most 30 wt%, or at most 25 wt%, or at most 20 wt%, or at most 15 wt%, or at most 10 wt%, or at most 5 wt%, or at most 1 wt%, of the glass fibers.

In certain aspects the composition further includes at least one additional additive. The at least one additional additive may include, but is not limited to, an acid scavenger, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

The at least one additional additive may be present in the composition an amount of about 0.01 wt% to about 10 wt% in some aspects. In further aspects the composition comprises at least 0.01 wt%, or at least 0.05 wt%, or at least 0.1 wt%, or at least 0.15 wt%, or at least 0.2 wt%, or at least 0.25 wt%, or at least 0.3 wt%, or at least 0.35 wt%, or at least 0.4 wt%, or at least 0.45 wt%, or at least 0.5 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.9 wt%, or at most 0.8 wt%, or at most 0.7 wt%, or at most 0.6 wt%, or at most 0.5 wt%, or at most 0.4 wt%, or at most 0.3 wt%, or at most 0.2 wt%, or at most 0.1 wt%, of the at least one additional additive.

In particular aspects the composition is free of perfluoroalkyl and polyfluoroalkyl substances (PFAS-free). As used herein, PFAS-free means that the composition includes less than 1 wt%, or less than 0.9 wt%, or less than 0.8 wt%, or less than 0.7 wt%, or less than 0.6 wt%, or less than 0.5 wt%, or less than 0.4 wt%, or less than 0.3 wt%, or less than 0.2 wt%, or less than 0.1 wt%, or less than .09 wt%, or less than .07 wt%, or less than .05 wt%, or less than .03 wt%, or less than .01 wt%, or less than .009 wt%, or less than .007 wt%, or less than .005 wt%, or less than .003 wt%, or less than .001 wt%, or less than 0.0001 wt%, or 0 wt% perfluoroalkyl and polyfluoroalkyl substances. In further aspects PFAS-free means that perfluoroalkyl and polyfluoroalkyl substances are not intentionally added to the composition. This could mean, for example, that PFAS are not separately added to the composition prior to blending, but there are minor amounts of perfluoroalkyl and polyfluoroalkyl substances remaining in the composition from impurities present in one or more of the other components included in the composition.

### Flame Retardant Properties

Compositions according to aspects of the disclosure have good flame retardant properties as compared to conventional compositions that do not include the thermoplastic polymeric ionomer.

In some aspects, the composition does not include glass fibers and has flame retardant rating of V0, V1 or V2 as evaluated according to UL94 at a sample thickness of 1.2 mm or less. In further aspects the composition does not include glass fibers and has flame retardant rating of V0, V1 or V2 as evaluated according to UL94 at a sample thickness of 1.0 mm or less, or 0.8 mm or less.

In other aspects the composition includes from about 0.1 wt% to about 40 wt% glass fibers and has a flame retardant rating of V0 or V1 as evaluated according to UL94 at a sample thickness of 0.8 mm or less. In specific aspects the composition includes from about 0.1 wt% to about 40 wt% glass fibers and has a flame retardant rating of V0 or V1 as evaluated according to UL94 at a sample thickness of 0.6 mm or less, or 0.4 mm or less.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, compression molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion formed. In a still further aspect, the article is injection molded.

In particular aspects, the article is a connector, an electronic housing, or an electrical housing. More specific articles include, but are not limited to components of automotive radars, high-power lighting components, power tools, distributor caps, ignition coils, switches, oven doorhandles, oven knobs, iron skirts, and coffee machines.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 40 wt% to about 85 wt% of a polyester resin;
b) from about 10 wt% to about 25 wt% of a phosphorous-based flame retardant; and
c) from about 0.1 wt% to about 10 wt% of a thermoplastic polymeric ionomer,
wherein the combined weight percent value of all components does not exceed 100 wt%, and all weight percent values are based on the total weight of the composition.

Aspect 2. The thermoplastic composition according to Aspect 1, wherein the polyester resin comprises polybutylene terephthalate (PBT), polyethylene terephthalate (PET), polytrimethylene terephthalate (PTT), copolymers thereof, or combinations thereof.

Aspect 3. The thermoplastic composition according to Aspect 1 or 2, wherein the polyester resin comprises PBT.

Aspect 4. The thermoplastic composition according to Aspect 3, wherein the composition comprises a high flow PBT having an intrinsic viscosity of less than 1.0 deciliters per gram (dl/g) and a low flow PBT having an intrinsic viscosity of at least 1.0 dl/g, wherein intrinsic viscosity is measured in a 60:40 phenol/tetrachloroethane mixture in accordance with ASTM D2857.

Aspect 5. The thermoplastic composition according to any one of Aspects 1 to 4, wherein the composition comprises from about 10 wt% to about 15 wt% of the phosphorous-based flame retardant.

Aspect 6. The thermoplastic composition according to any one of Aspects 1 to 5, wherein the phosphorous-based flame retardant comprises a dialkyl phosphinic acid salt.

Aspect 7. The thermoplastic composition according to any one of Aspects 1 to 6, wherein the composition comprises from about 0.25 wt% to about 5 wt% of the thermoplastic polymeric ionomer.

Aspect 8. The thermoplastic composition according to any one of Aspects 1 to 7, wherein the thermoplastic polymeric ionomer comprises a sulphonated polyethylene terephthalate ionomer, an ethylene/methacrylic acid copolymer, or a combination thereof.

Aspect 9. The thermoplastic composition according to any one of Aspects 1 to 8, wherein the thermoplastic polymeric ionomer comprises a sulphonated polyethylene terephthalate ionomer.

Aspect 10. The thermoplastic composition according to any one of Aspects 1 to 9, wherein the composition further comprises from about 0.1 wt% to about 10 wt% of a polyetherimide (PEI) polymer.

Aspect 11. The thermoplastic composition according to any one of Aspects 1 to 10, wherein the composition further comprises from about 0.1 wt% to about 10 wt% of an additional flame retardant comprising melamine polyphosphate, melamine cyanurate, melamine pyrophosphate, melamine phosphate, or the combination thereof.

Aspect 12. The thermoplastic composition according to any one of Aspects 1 to 11, wherein the composition further comprises from about 0.1 wt% to about 40 wt% glass fibers.

Aspect 13. The thermoplastic composition according to any one of Aspects 1 to 12, wherein the composition further comprises at least one additional additive.

Aspect 14. The thermoplastic composition according to Aspect 13, wherein the at least one additional additive comprises an acid scavenger, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

Aspect 15. The thermoplastic composition according to any one of Aspects 1 to 14, wherein the composition is free of perfluoroalkyl or polyfluoroalkyl substances (PFAS).

Aspect 16. The thermoplastic composition according to any one of Aspects 1 to 15, wherein the composition does not comprise glass fibers and has flame retardant rating of V0, V1 or V2 as evaluated according to UL94 at a sample thickness of 1.2 mm or less.

Aspect 17. The thermoplastic composition according to any one of Aspects 1 to 15, wherein the composition comprises from about 0.1 wt% to about 40 wt% glass fibers and has a flame retardant rating of V0 or V1 as evaluated according to UL94 at a sample thickness of 0.8 mm or less.

Aspect 18. An article comprising the thermoplastic composition according to any one of Aspects 1 to 17.

Aspect 19. The article according to Aspect 18, wherein the article is a connector, an electronic housing, or an electrical housing.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included one or more of the components listed in Table 1:

**Table 1 - Components**

| | | |
|---|---|---|
| PBT-1 | Polybutylene terephthalate, CAS Reg. No. 26062-94-2, having an intrinsic viscosity of 0.6 to 0.7 deciliters per gram (dL/g) as measured at 30 °C in a 1:1 w/w solution of phenol:1,1,2,2-tetrachloroethane, and having 17 milliequivalents per kilogram (meq/kg) of COOH | SABIC |
| PBT-2 | Polybutylene terephthalate, CAS Reg. No. 26062-94-2, having an intrinsic viscosity of 1.19 L/g as measured at 30 °C in a 1:1 w/w solution of phenol:1,1,2,2-tetrachloroethane, and having 38 meq/kg of COOH | SABIC |
| PHBPP | Pentaerythritol 3-(4-hydroxy-3,5-di-tert-butylphenyl)propionate (1:4), CAS Reg. No. 6683-19-8; obtained as Irganox^{®} 1010, antioxidant | BASF |
| PETS | Pentaerythritol tetrastearate, CAS Reg. No. 115-83-3, mold release | FACI |
| DEPAL | Aluminum tris(diethyl phosphinate), CAS Reg. No. 225789-38-8; obtained as Exolit^{®} OP1240; 24 wt% phosphorus | Clariant |
| MPP | Melamine polyphosphate, CAS Reg. No. 56386-64-2, obtained as Melapur^{®} 200; 24 wt% phosphorus | BASF |
| TSAN | Encapsulated Polytetrafluoroethylene, CAS Reg. No. 9002-84-0, with 47-53 wt% poly(tetrafluoroethylene) | SABIC |
| Elastomer | Hytrel^{®} 4056 | DuPont |
| PEI | Polyetherimide, Ultem^{™} 1010CP-1000 grade | SABIC |
| Ionomer-1 | Partial sodium neutralized ethylene/methacrylic acid copolymer, obtained as Surlyn^{®} 8940 | Dow |
| Ionomer-2 | Sulphonated PET ionomer obtained as EASY CATIONIC DYEABLE PET CHIP (ECDP) with a salt content of 6% and IV=0.51 dl/g (60:40, Phenol: TCE @25°C) | Hubei Decon Polyester |
| GF | Chopped glass fibers having a diameter of 10 µm and a pre-compounded length of 3.0 mm; obtained as EC S03T-120H | NEG |

Compositions were compounded on a 25 mm Werner Pfleiderer ZSK co-rotating twin-screw extruder with a vacuum vent and a screw speed of 300 rpm. The temperature profile and other extrusion conditions are provided in Table 2:

**Table 2 - Extrusion Conditions**

| **Parameter** | **Unit** | **Value** |
|---|---|---|
| Feed (Zone 0) Temp | °C | 40 |
| Zone 1 temp | °C | 150 |
| Zone 2 Temp | °C | 240 |
| Zones 3-8 Temp | °C | 260 |
| Die Temp | °C | 260 |
| Screw speed | NA | 300 |
| Throughput | kg/hr | 30 |
| Torque | % | ~75 |
| Vacuum 1 | bar | 0.5 |

The strands were cooled through a water bath prior to pelletizing. An Engel 90 ton molding machine was used to mold test parts for standard physical property testing. The pellets were dried for 2 hours at 110 °C in a forced air-circulating oven prior to injection molding. Molding conditions are provided in Table 3:

**Table 3 - Molding Conditions**

| **Parameter** | **Unit** | **Value** |
|---|---|---|
| Pre-drying time | Hour | 2 |
| Pre-drying temp | °C | 110 |
| Hopper temp | °C | 40 |
| Zone 1 temp | °C | 240 |
| Zone 2 temp | °C | 250 |
| Zone 3 temp | °C | 260 |
| Nozzle temp | °C | 255 |
| Mold temp | °C | 70 |
| Screw speed | rpm | 100 |

Comparative compositions that did not include an ionomer component were prepared and their UL94 properties tested as shown in Table 4A. Composition CE1 included a conventional TSAN anti-drip component:

**Table 4A - Comparative Compositions**

| **Component** | **CE1** | **CE2** |
|---|---|---|
| PBT-1 | 41.65 | 42.15 |
| PBT-2 | 15 | 15 |
| PHBPP | 0.15 | 0.15 |
| PETS | 0.2 | 0.2 |
| DEPAL | 12.5 | 12.5 |
| MPP | 5 | 5 |
| TSAN | 0.5 | |
| PEI | | |
| Ionomer-1 | | |
| Ionomer-2 | | |
| GF | 25 | 25 |
| **Total (wt%)** | 100 | 100 |
| | | |

| **Properties** | | |
|---|---|---|
| UL94 FR | | |
| 0.8 mm | V0 | V1 |
| 0.6 mm | V0 | V2 |
| 0.4 mm | V0 | V2 |

Example compositions that included varying amounts of an aliphatic ionomer (Ionomer-1) and phosphorous-based flame retardant were prepared and their UL94 properties tested as shown in Table 4B:

**Table 4B - Example Compositions Including Ionomer-1**

| **Component** | **EA1** | **EA2** | **EA3** | **EA4** | **EA5** | **EA6** | **EA7** | **EA8** | **EA9** |
|---|---|---|---|---|---|---|---|---|---|
| PBT-1 | 41.9 | 41.65 | 41.15 | 40.15 | 39.15 | 39.4 | 39.15 | 36.65 | 36.65 |
| PBT-2 | 15 | 15 | 15 | 15 | 15 | 15 | 15 | 15 | 15 |
| PHBPP | 0.15 | 0.15 | 0.15 | 0.15 | 0.15 | 0.15 | 0.15 | 0.15 | 0.15 |
| PETS | 0.2 | 0.2 | 0.2 | 0.2 | 0.2 | 0.2 | 0.2 | 0.2 | 0.2 |
| DEPAL | 12.5 | 12.5 | 12.5 | 12.5 | 12.5 | 15 | 15 | 17.5 | 12.5 |
| MPP | 5 | 5 | 5 | 5 | 5 | 5 | 5 | 5 | 5 |
| TSAN | | | | | | | | | |
| PEI | | | | | | | | | 5 |
| Ionomer-1 | 0.25 | 0.5 | 1 | 2 | 3 | 0.25 | 0.5 | 0.5 | 0.5 |
| Ionomer-2 | | | | | | | | | |
| GF | 25 | 25 | 25 | 25 | 25 | 25 | 25 | 25 | 25 |
| **Total (wt%)** | 100 | 100 | 100 | 100 | 100 | 100 | 100 | 100 | 100 |
| | | | | | | | | | |

| **Properties** | | | | | | | | | |
|---|---|---|---|---|---|---|---|---|---|
| UL94 FR | | | | | | | | | |
| 0.8 mm | V1 | V1 | NT | NT | NT | V0 | V1 | V1 | V1 |
| 0.6 mm | NT | V1 | NR | NR | NR | V0 | NT | NT | V1 |
| 0.4 mm | NT | V1 | V1 | V1 | V1 | V0 | NT | NT | V1 |

In these tables "NT" means "not tested" and "NR" means not rated. "Not rated" means that the sample does not fulfill the requirements for a V0, V1 or a V2 rating. For example, the sample exceeds the 30 second flame-out limit while not dripping, or burning up to the clamp. Testing may be skipped on a sample ("not tested") if, e.g., the sample already has a rating higher than V0 at a higher thickness, so it is not necessary to test thinner samples because the rating would be expected to be the same or even lower.

Further example compositions that included varying amounts of a sulphonated PET ionomer (Ionomer-2) and phosphorous-based flame retardant were prepared and their UL94 properties tested as shown in Table 4C:

**Table 4C - Example Compositions Including Ionomer-2**

| **Component** | **EB1** | **EB2** | **EB3** | **EB4** | **EB5** | **EB6** | **EB7** | **EB8** | **EB9** |
|---|---|---|---|---|---|---|---|---|---|
| PBT-1 | 41.65 | 41.15 | 34.65 | 39.15 | 38.9 | 38.65 | 38.15 | 37.65 | 36.65 |
| PBT-2 | 15 | 15 | 15 | 15 | 15 | 15 | 15 | 15 | 15 |
| PHBPP | 0.15 | 0.15 | 0.15 | 0.15 | 0.15 | 0.15 | 0.15 | 0.15 | 0.15 |
| PETS | 0.2 | 0.2 | 0.2 | 0.2 | 0.2 | 0.2 | 0.2 | 0.2 | 0.2 |
| DEPAL | 12.5 | 12.5 | 15 | 15 | 15 | 15 | 15 | 15 | 15 |
| MPP | 5 | 5 | 5 | 5 | 5 | 5 | 5 | 5 | 5 |
| TSAN | | | | | | | | | |
| PEI | | | | | | | | | |
| Ionomer-1 | | | | | | | | | |
| Ionomer-2 | 0.5 | 1 | 5 | 0.5 | 0.75 | 1 | 1.5 | 2 | 3 |
| GF | 25 | 25 | 25 | 25 | 25 | 25 | 25 | 25 | 25 |
| **Total (wt%)** | 100 | 100 | 100 | 100 | 100 | 100 | 100 | 100 | 100 |
| | | | | | | | | | |

| **Properties** | | | | | | | | | |
|---|---|---|---|---|---|---|---|---|---|
| UL94 FR | | | | | | | | | |
| 0.8 mm | V0 | V0 | V0 | V0 | V0 | V0 | V0 | V0 | V0 |
| 0.6 mm | V1 | V0 | V0 | V1 | V0 | V0 | V0 | V0 | V0 |
| 0.4 mm | NT | NT | V1 | NT | NT | V1 | V0 | V0 | V0 |

From the results, it was observed that comparative composition CE1 which included PTFE had a V0 rating at sample thicknesses of 0.8 mm and 0.6 mm. Removing the PTFE anti-drip component reduced the flame performance resulting in a V1 rating at 0.8 mm and even V2 ratings at smaller thicknesses (composition CE2).

Example compositions EA1-EA9 included an ethylenic copolymer to prevent dripping (Ionomer-1). This ethylene based material adds to the fuel, however, and at higher concentrations reduces UL94 performance. Accordingly, most of these compositions have either a V1 or are unrated (individual flame-out times larger as 30 seconds). See EA1 to EA5 and EA7 to EA9. However, at a very low loading of Ionomer-1 (e.g., 0.25 wt%) and a slightly higher content of phosphorous-based flame retardant (aluminum tris(diethyl phosphinate), DEPAL), composition EA6 had a V0 rating at 0.8 mm so could be suitable in some applications.

Example compositions EB1-EB9 included various amounts of a sulphonated PET ionomer (Ionomer-2). This ionomer is semi-aromatic and adds less fuel to the flame during the flame test. In addition, semi-aromatic polyesters would be expected to be more miscible with the base PBT resin and provide better mechanical properties. The improved FR performance can be observed in Table 4C. At an ionomer loading of 0.5 wt% and higher, a V0 rating can be achieved in a 0.8 mm sample thickness (see EB1 to EB3). Compositions having an ionomer loading above 0.5 wt% could even achieve a V0 rating at wall thicknesses of 0.6 mm (see EB2 and EB3). Although V0 ratings were achieved, a spread in flame-out times (FOT) was observed, with outliers having a FOT of close to 10 seconds. Increasing the phosphorous flame retardant (FR) content provided more robust FR performance (see compositions EB3-EB9), and at ionomer loadings of 1.5-3 wt% a V0 rating at 0.4 mm was observed (see compositions EB7-EB9).

Further unfilled comparative and example compositions based on the sulphonated PET ionomer (Ionomer-2) were prepared and their UL94 properties evaluated as shown in Table 5:

**Table 5 - Unfilled Comparative and Example Compositions**

| **Component** | **CE-3** | **CE-4** | **EC-1** | **EC-2** | **EC-3** | **EC-4** | **EC-5** |
|---|---|---|---|---|---|---|---|
| PBT-1 | 30 | 30.5 | 29.5 | 26.5 | 29.45 | 27.9 | 26.15 |
| PBT-2 | 50.15 | 50.15 | 50.15 | 50.15 | 49.2 | 46.75 | 43.5 |
| PHBPP | 0.15 | 0.15 | 0.15 | 0.15 | 0.15 | 0.15 | 0.15 |
| PETS | 0.2 | 0.2 | 0.2 | 0.2 | 0.2 | 0.2 | 0.2 |
| DEPAL | 14 | 14 | 14 | 17 | 14 | 14 | 14 |
| MPP | | | | | | 5 | 5 |
| TSAN | 0.5 | | | | | | |
| Elastomer | 5 | 5 | 5 | 5 | 5 | 5 | 5 |
| PEI | | | | | | | 5 |
| Ionomer-2 | | | 1 | 1 | 2 | 1 | 1 |
| **Total (wt%)** | 100 | 100 | 100 | 100 | 100 | 100 | 100 |
| | | | | | | | |

| **Properties** | | | | | | | |
|---|---|---|---|---|---|---|---|
| UL94 FR | | | | | | | |
| 1.6 mm | V0 | V0 | V0 | V0 | V0 | V0 | V0 |
| 1.2 mm | V0 | V2 | V2 | V0 | V0 | V2 | V2 |
| 0.8 mm | V0 | V2 | V2 | V2 | V2 | NT | NT |

From the results it was seen that addition of 1-2 wt% of a sulphonated PET ionomer (Ionomer-2) resulted in compositions having a V0 rating at a thickness of 1.2 mm, although at 1 wt% ionomer content the phosphorous FR loading (DEPAL) was slightly increased to allow the sample to achieve a V0 rating at this thickness (see EC-2). The comparative compositions without TSAN could not achieve a V0 rating at the 1.2 mm thickness.

Without being bound by theory, it is believed that ionic aggregation of the ionic groups of the thermoplastic polymeric ionomer leads to a strong increase in zero shear viscosity which prevents dripping under the influence of the gravity.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 40 wt% to about 85 wt% of a polyester resin;
b) from about 10 wt% to about 25 wt% of a phosphorous-based flame retardant; and
c) from about 0.1 wt% to about 10 wt% of a thermoplastic polymeric ionomer,
wherein the combined weight percent value of all components does not exceed 100 wt%, and all weight percent values are based on the total weight of the composition.

2. The thermoplastic composition according to claim 1, wherein the polyester resin comprises polybutylene terephthalate (PBT), polyethylene terephthalate (PET), polytrimethylene terephthalate (PTT), copolymers thereof, or combinations thereof.

3. The thermoplastic composition according to claim 1 or 2, wherein the polyester resin comprises PBT.

4. The thermoplastic composition according to any one of claims 1 to 3, wherein the phosphorous-based flame retardant comprises a dialkyl phosphinic acid salt.

5. The thermoplastic composition according to any one of claims 1 to 4, wherein the composition comprises from about 0.25 wt% to about 5 wt% of the thermoplastic polymeric ionomer.

6. The thermoplastic composition according to any one of claims 1 to 5, wherein the thermoplastic polymeric ionomer comprises a sulphonated polyethylene terephthalate ionomer, an ethylene/methacrylic acid copolymer, or a combination thereof.

7. The thermoplastic composition according to any one of claims 1 to 6, wherein the thermoplastic polymeric ionomer comprises a sulphonated polyethylene terephthalate ionomer.

8. The thermoplastic composition according to any one of claims 1 to 7, wherein the composition further comprises from about 0.1 wt% to about 10 wt% of a polyetherimide (PEI) polymer.

9. The thermoplastic composition according to any one of claims 1 to 8, wherein the composition further comprises from about 0.1 wt% to about 10 wt% of an additional flame retardant comprising melamine polyphosphate, melamine cyanurate, melamine pyrophosphate, melamine phosphate, or the combination thereof.

10. The thermoplastic composition according to any one of claims 1 to 9, wherein the composition further comprises from about 0.1 wt% to about 40 wt% glass fibers.

11. The thermoplastic composition according to any one of claims 1 to 10, wherein the composition further comprises at least one additional additive comprising an acid scavenger, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

12. The thermoplastic composition according to any one of claims 1 to 11, wherein the composition is free of perfluoroalkyl or polyfluoroalkyl substances (PFAS).

13. The thermoplastic composition according to any one of claims 1 to 12, wherein the composition does not comprise glass fibers and has flame retardant rating of V0, V1 or V2 as evaluated according to UL94 at a sample thickness of 1.2 mm or less.

14. The thermoplastic composition according to any one of claims 1 to 13, wherein the composition comprises from about 0.1 wt% to about 40 wt% glass fibers and has a flame retardant rating of V0 or V1 as evaluated according to UL94 at a sample thickness of 0.8 mm or less.

15. An article comprising the thermoplastic composition according to any one of claims 1 to 14, wherein the article is a connector, an electronic housing, or an electrical housing.
